# EUROPEAN PATENT APPLICATION

(11) **EP 2 160 025 A2**
(43) Date of publication of application: **03.03.2010**
(21) Application number: 09168582.6
(22) Date of filing: 25.08.2009
(51) Int. Cl.: H04N 5/445

(54) **Information processing apparatus and operation setting method**

(30) Priority: 26.08.2008 JP 2008217165
(71) Applicant: Sony Corporation, Tokyo (JP)
(72) Inventor: Kawabe, Shingo, Tokyo (JP); Sagane, Tomonari, Tokyo (JP)
(74) Representative: Thévenet, Jean-Bruno

(57) **Abstract**

An information processing apparatus according to an embodiment of the present invention includes an input unit (140) into which a language used by a user and a usage country are input, a plurality of information providing units (120,130) that provide program information a display unit (160) that displays the program information, a decision unit (150,170) that decides one information providing unit to be operated based on the input usage country and a predetermined order of precedence, and a language determination unit (174) that determines whether the input language used is included in languages supported by the operated information providing unit. If the language determination unit (174) determines that the language used is not included in languages supported by the operated information providing unit, the language determination unit (174) causes the user to select the language used from the languages supported by the operated information providing unit.

## Description

### BACKGROUND OF THE INVENTION

### FIELD OF THE INVENTION

The present invention relates to an information processing apparatus and an operation setting method, and in particular, relates to an information processing apparatus provided with a plurality of information providing units that provide program information and an operation setting method of the information providing units.

### DESCRIPTION OF THE RELATED ART

In recent years, in digital broadcasting, a system called EPG (Electronic Program Guide) that acquires an electronic program guide through a broadcast receiving terminal via a digital broadcast wave or the Internet and displays the electronic program guide in the screen has been practically used. In the electronic program guide, program information such as program names, broadcasting start times, broadcasting end times, program content, and performers of programs for one day provided from broadcasting stations is displayed in order of broadcasting schedules for each channel. The user looks at the electronic program guide displayed in a broadcasting receiving terminal and selects and views a desired program.

Program information provided by the EPG is different depending on the program information provider and a plurality of specifications of EPG itself exists. Thus, a receiving apparatus provided with a plurality of EPGs to provide information provided by such program information providers to users is proposed (For example, Japanese Patent Application Laid-Open No. 2007-60576). A receiving apparatus according to Japanese Patent Application Laid-Open No. 2007-60576 can display program guides of EPGs of different specifications that are prohibited from displaying in the same screen by conventions by switching according to user instructions. Accordingly, the user can receive information provided by a plurality of program information providers.

[Patent Document 1] Japanese Patent Application Laid-Open No. 2007-60576

### SUMMARY OF THE INVENTION

However, it is difficult for a receiving apparatus described in Japanese Patent Application Laid-Open No. 2007-60576 to change the EPG to be used unless the user gives instructions. It is also necessary for such a receiving apparatus to operate a plurality of EPGs simultaneously in order to be able to display program guides provided by the plurality of program information providers by switching such program guides. Thus, there is a problem that it is necessary to have more memories to operate EPGs, leading to more costs of devices. Further, because the plurality of EPGs exists, there is a possibility that a plurality of pieces of program information about programs of the same content exists. Thus, it is necessary to investigate databases of all EPGs to avoid a conflict of recording/viewing settings, which results in more complex programs and can slow down a response speed to a user operation.

The present invention has been made in view of the above problems and it is desirable to provide a novel and improved information processing apparatus capable of automatically selecting an EPG from a plurality of EPGs and an operation setting method.

According to an embodiment of the present invention, there is provided an information processing apparatus including: an input unit into which a language used by a user and a usage country are input; a plurality of information providing units that provide program information; a display unit that displays the program information; a decision unit that decides one information providing unit to be operated based on the input usage country and a predetermined order of precedence; and a language determination unit that determines whether the input language used is included in languages supported by the operated information providing unit. Here, if the language determination unit determines that the language used is not included in languages supported by the operated information providing unit, the language determination unit causes the user to select the language used from the languages supported by the operated information providing unit.

According to the information processing apparatus of the present invention, only one information providing unit among a plurality of information providing units provided is caused to operate. In this case, the information processing apparatus decides the information providing unit to be operated based on the country in which the information processing apparatus is used and a predetermined order of precedence. If the decided information providing unit does not support the language used, the user is caused to select the language to be used when program information is provided from languages supported by the information providing unit. Accordingly, the program information desired by the user can be provided in the desired language.

Here, if the plurality of information providing units that support the usage country exists, the decision unit may decide as one information providing unit to be operated the information providing unit capable of providing most detailed program information.

The information processing apparatus may include a setting determination unit that determines whether, based on change instructions of the information providing unit to be operated, the information providing unit after the change and the currently operating information providing unit are identical; and a setting processing unit that, if the setting determination unit determines that the information providing unit after the change and the currently operating information providing unit are different, makes settings of the information providing unit after the change. Here, the setting processing unit may make settings of the selected information providing unit only if the selected information providing unit is not set.

Further, if the information providing unit after the change does not support the language used, the language determination unit may cause the user to select the language used from the languages supported by the information providing unit after the change.

The information processing apparatus according to the present invention may further include a position information acquisition unit that acquires position information representing a position where the information processing apparatus is used. Here, the decision unit determines the usage country from the position information acquired by the position information acquisition unit and decides the information providing unit to be operated based on the determined usage country.

According to another embodiment of the present invention, there is provided an operation setting method including the steps of: inputting a language used by a user and a usage country; deciding one information providing unit to be operated from among a plurality of information providing units that provide program information based on the input usage country and a predetermined order of precedence; determining whether the input language used is included in languages supported by the operated information providing unit; and causing the user to select the language used from the languages supported by the operated information providing unit if it is determined that the language used is not included in the languages supported by the operated information providing unit.

According to the embodiments of the present invention, an information processing apparatus capable of automatically selecting an EPG from a plurality of EPGs and an operation setting method can be provided.

### BRIEF DESCRIPTION OF THE DRAWINGS

FIG. 1 is a block diagram showing the configuration of an information processing apparatus according to an embodiment of the present invention;
FIG. 2 is a flow chart showing selection processing of an information providing unit performed during initialization of the information processing apparatus according to the embodiment;
FIG. 3 is an explanatory view exemplifying a language used selection screen;
FIG. 4 is an explanatory view exemplifying a usage country selection screen;
FIG. 5 is an explanatory view exemplifying a program information language selection screen;
FIG. 6 is a flow chart showing change processing of the information providing unit according to the embodiment; and
FIG. 7 is an explanatory view exemplifying a setting screen to select the information providing unit to be used.

### DETAILED DESCRIPTION OF EMBODIMENTS

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

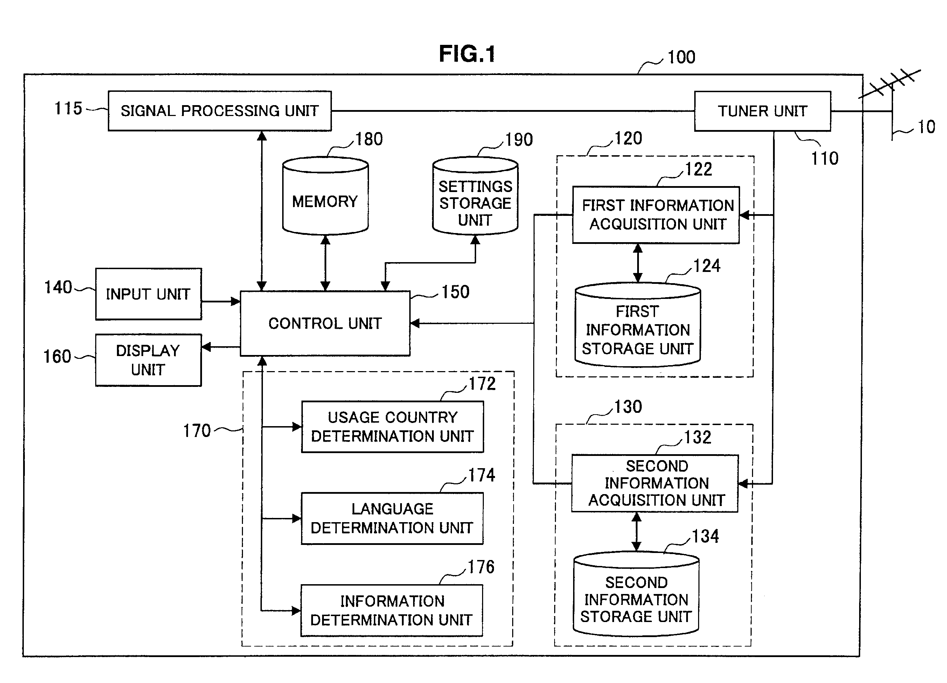

First, the configuration of an information processing apparatus according to an embodiment of the present invention will be described based on FIG. 1. FIG. 1 is a block diagram showing the configuration of an information processing apparatus 100 according to the present embodiment.

### <Configuration of the information processing apparatus>

The information processing apparatus 100 according to the present embodiment is a TV set capable of, for example, receiving and displaying digital broadcasting. A TV set in the present embodiment has two EPGs (also called "information providing units" in the present embodiment) capable of providing different program information mounted therein and can provide program information in a language desired by the user by automatically selecting one of the EPGs. As shown in FIG. 1, the information processing apparatus 100 includes a tuner unit 110, a signal processing unit 115, a first information providing unit 120, a second information providing unit 130, an input unit 140, a control unit 150, a display unit 160, a selection processing unit 170, a memory 180, and a settings storage unit 190.

The tuner unit 110 is connected to an antenna 10 that receives a video signal from a broadcasting station and selects and demodulates a video signal of a specific frequency band of the received video signal including video, sound, program information and the like. The tuner unit 110 sends program information of the demodulated video signal to the first information providing unit 120 or the second information providing unit 130. The program information includes information such as broadcasting times and program content.

The signal processing unit 115 is a codec that encodes/decodes a video signal according to predetermined rules. The signal processing unit 115 includes an encoder that, after receiving a video signal from the tuner unit 110, encodes the video signal into a predetermine format and a decoder that decodes encoded data. The signal processing unit 115 sends the decoded video signal to the display unit 160 described below.

The first information providing unit 120 is an EPG that provides first program information received from the tuner unit 110 and is assumed in the present embodiment to be an EPG capable of realizing advanced functions by acquiring specific data from a broadcast wave. As shown in FIG. 1, the first information providing unit 120 includes a first information acquisition unit 122 and a first information storage unit 124. The first information acquisition unit 122 stores first program information received from the tuner unit 110 in the first information storage unit and sends the first program information to the control unit 150 according to instructions from the control unit 150 described below. The first information storage unit 124 is a storage unit that stores first program information. In addition to information such as program names, program content, and broadcasting times, the first program information includes rebroadcasting information to realize advanced functions and, for serial programs, program information about programs already broadcast or to be broadcast. Accordingly, not only information about a program, but also information about programs related to the program can be provided to the user.

The first information providing unit 120 provides first program information in the standard language of the target country (usage country). The first information providing unit 120 can provide the first program information not only in the standard language of the usage country, but also in one or two or more languages. The first information providing unit 120 can also have an operation menu or the like displayed in an EPG screen in one or two or more display languages.

The second information providing unit 130 is an EPG that provides second program information received from the tuner unit 110. The second information providing unit 130 in the present embodiment is an EPG that operates by acquiring general-purpose SI (Service Information) data specified by the digital broadcasting standard DVB (Digital Video Broadcasting) from a broadcast wave. As shown in FIG. 1, the second information providing unit 130 includes a second information acquisition unit 132 and a second information storage unit 134. The second information acquisition unit 132 stores second program information received from the tuner unit 110 in the second information storage unit and sends the second program information to the control unit 150 according to instructions from the control unit 150 described below. The second information storage unit 134 is a storage unit that stores second program information. Information such as program names, program content, and broadcasting times is included in the second program information. That is, compared with the first program information, the second program information provided by the second information providing unit 130 is simpler information.

The second information providing unit 130 provides second program information in the standard language of the target country (usage country). The second information providing unit 130 can provide the second program information not only in the standard language of the usage country, but also in one or two or more languages. The second information providing unit 130 can also have an operation menu or the like displayed in an EPG screen in one or two or more display languages.

The first information providing unit 120 and the second information providing unit 130 can be stored in a flash memory as programs that control functions of EPGs. A program in a flash memory runs after being expanded in a DRAM (Dynamic Random Access Memory).

The input unit 140 is an input unit to input an operation such as a selection of an icon displayed in the display unit 160 described below by the user. The input unit 140 is, for example, a button, key, or remote controller provided in the information processing apparatus 100. The input unit 140 includes an "up key", "down key", "right key", and "left key" to move a cursor displayed in the display unit 160 and a "Decide key" to select an icon located at the cursor position. The input unit 140 outputs information input by the user to the control unit 150.

The control unit 150 is a function unit that controls processing to display program information in the display unit 160 described below. The control unit 150 stores, of information received from the input unit 140, setting information about settings of the information processing apparatus 100 in the settings storage unit 190. The control unit 150 also causes the selection processing unit 170 to perform processing in which a selection is made of which information providing unit of the first information providing unit 120 and the second information providing unit 130 should be caused to operate. Further, the control unit 150 acquires program information from the first information providing unit 120 or the second information providing unit 130 in operation and sends the program information to the display unit 160.

The display unit 160 is a function unit that displays a video signal received from the tuner unit 110 via the signal processing unit 115 or program information received from the control unit 150. For example, a liquid crystal display or an organic EL display can be used as the display unit 160.

The selection processing unit 170 is a processing unit of making a selection of which information providing unit of the first information providing unit 120 and the second information providing unit 130 provided in the information processing apparatus 100 should be caused to operate. As shown in FIG. 1, the selection processing unit 170 includes a usage country determination unit 172, a language determination unit 174, and an information determination unit 176.

The usage country determination unit 172 tentatively decides the information providing unit to be used based on the usage country, which is one piece of setting information stored in the settings storage unit 190, after receiving instructions from the control unit 150 and sends information about the tentatively decided information providing unit to the control unit 150. The language determination unit 174 determines whether the language used set as setting information is included in languages supported by the information providing unit tentatively decided by the usage country determination unit 172 after receiving instructions from the control unit 150 and sends a determination result to the control unit 150. The information determination unit 176 determines whether the information providing unit newly selected by the user and the information providing unit set as the information providing unit currently in use match after receiving instructions from the control unit 150 and sends a determination result to the control unit 150.

The function units configured with the control unit 150 and the selection processing unit 170 can be realized as programs and can be stored in a flash memory as well as the memory 180 or the settings storage unit 190.

The memory 180 is a storage unit that can store a portion of first program information stored in the first information storage unit 124 and second program information stored in the second information storage unit 134. The settings storage unit 190 is a storage unit to store basic setting information of the information processing apparatus 100. The settings storage unit 190 stores, for example, the usage country in which the information processing apparatus 100 is used, the language used when information is displayed, information about auto-tuning, and information necessary for processing to cause the information processing apparatus 100 to start in a short time as basic setting information. The memory 180 or the settings storage unit 190 can be configured with, for example, a flash memory.

In the foregoing, the configuration of the information processing apparatus 100 according to the present embodiment has been described. While the information processing apparatus 100 can acquire an electronic program guide configured with program information using the first information providing unit 120 or the second information providing unit 130, the information providing unit that operates is only one of both the information providing units. This is because both the first information providing unit 120 and the second information providing unit 130 according to the present embodiment provide program information about digital broadcasting programs and thus, there is no need to cause both the information providing units to operate simultaneously. Moreover, if both the information providing units are used simultaneously, it becomes necessary to provide more resources (such as DRAM and flash memories). Thus, the information processing apparatus 100 according to the present embodiment causes an appropriate information providing unit to operate in accordance with a purpose or usage environment by completely stopping the other information providing unit when one information providing unit is operating so that resources are shared by the two information providing units.

At this point, as described above, the first information providing unit 120 can provide advanced functions so that, when compared with the second information providing unit 130 that provides program guide generated from general-purpose SI data, more program information can be provided to the user. Therefore, first program information is preferably provided to the user by using the first information providing unit 120.

However, if languages that can be provided for first program information by the first information providing unit 120 are limited, the user may not be able to understand the display language displayed in an operation screen or the like to provide first program information by the first information providing unit 120. In such a case, it is desirable for the user that an operation menu and the like be displayed in a language understandable to the user in terms of ease of operation, though advanced functions are excluded from being provided. Based on such an idea, the information processing apparatus 100 according to the present embodiment decides which information providing unit of the two information providing units 120 and 130 to operate and use based on the language used by the user and the usage country in which the apparatus is used.

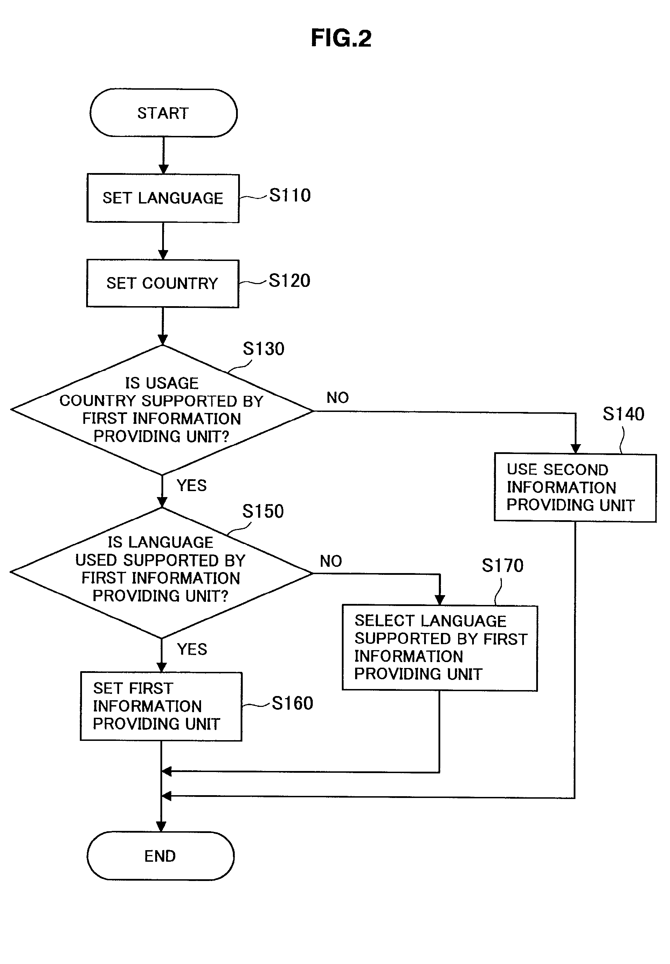

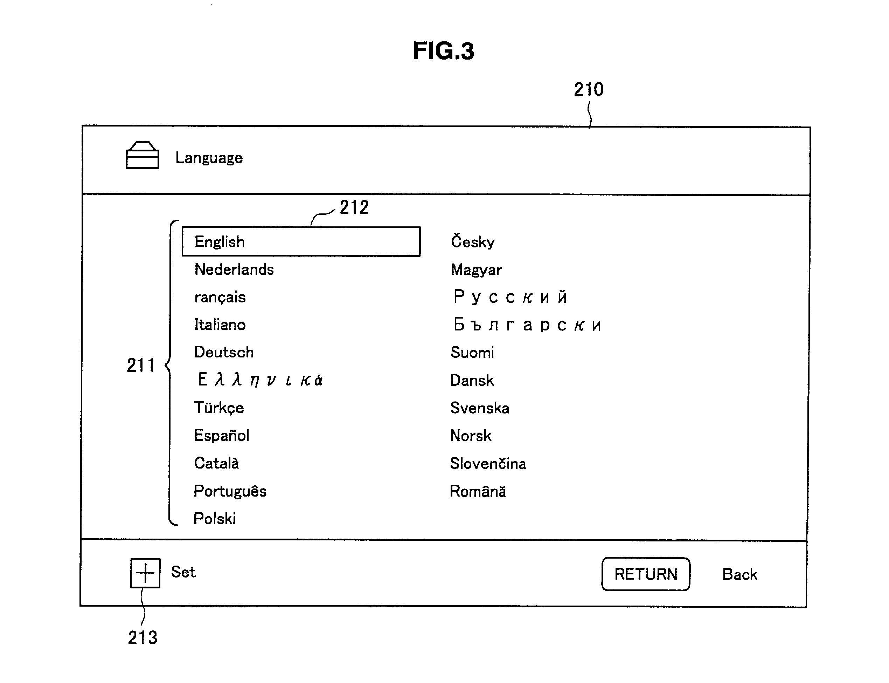

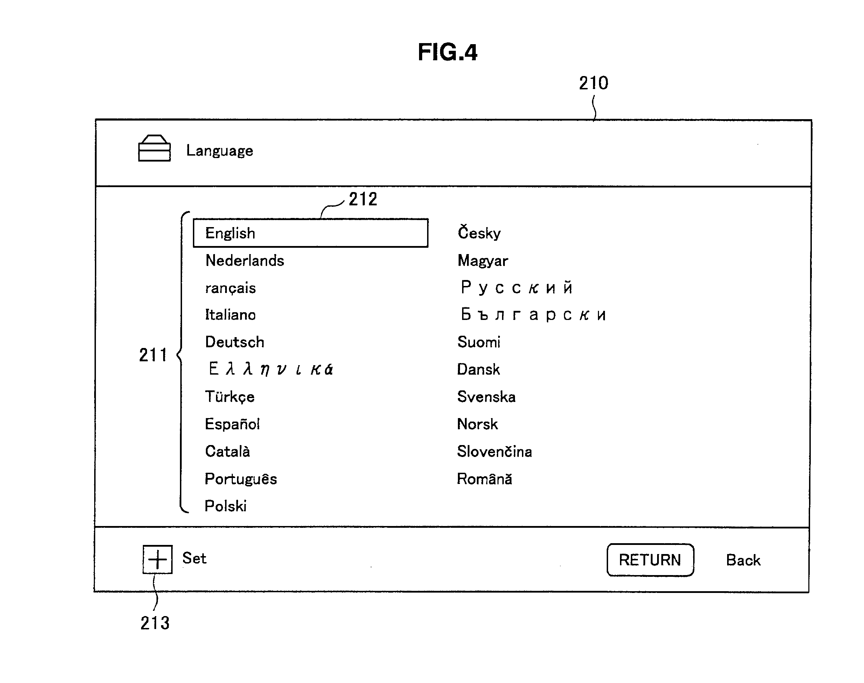

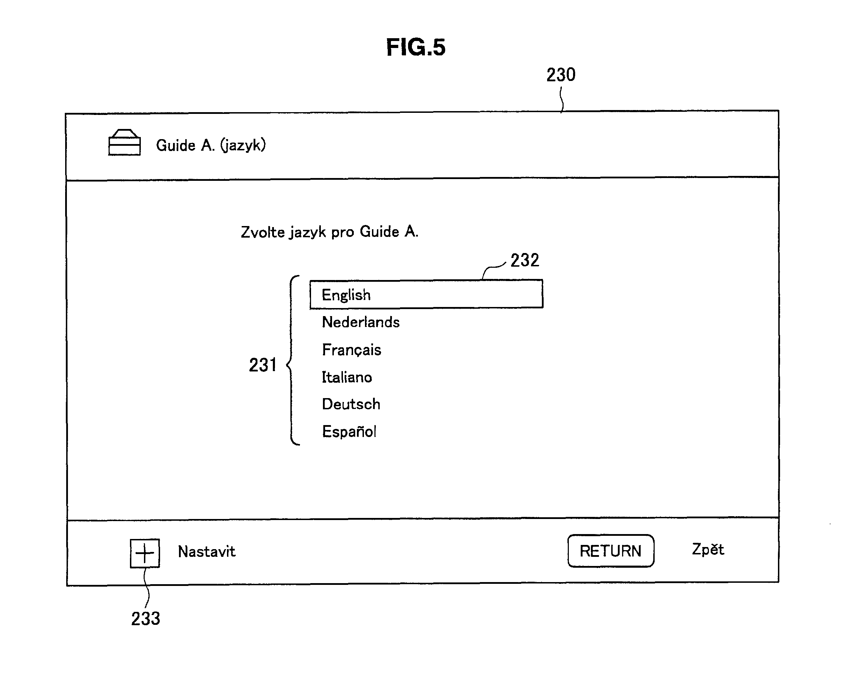

Selection processing of the information providing unit according to the present embodiment will be described below. First, selection processing of the information providing unit performed during initialization of the information processing apparatus 100 will be described based on FIGS. 2 to 5. FIG. 2 is a flow chart showing selection processing of the information providing unit performed during initialization of the information processing apparatus 100 according to the present embodiment. FIG. 3 is an explanatory view exemplifying a language used selection screen 210. FIG. 4 is an explanatory view exemplifying a usage country selection screen 220. FIG. 5 is an explanatory view exemplifying a program information language selection screen 230.

### <Selection processing of the information providing unit performed during initialization of the information processing apparatus>

In the information processing apparatus 100 according to the present embodiment, basic setting information is set during initial use of the apparatus. In such processing, the information providing unit to be used is also set. In setting processing of basic setting information during initial use, as shown in FIG. 2, first the language used by the user is set (S110). The language used set at S110 is a common language used throughout the information processing apparatus 100 in common. Therefore, the language set at S110 is not only the display language displayed in an operation menu to operate program information provided by the information providing unit, but also the language used to display content displayed when basic setting information of the information processing apparatus 100 is set or notification information or the like.

The language used can be set, for example, in the language used selection screen 210 shown in FIG. 3. A language list 211, which is a list of languages that can be set as a language used, is displayed in the language used selection screen 210 and the user selects one language from the language list 211 by moving a cursor 212 from the input unit 140. Then, the language on the cursor 212 can be set as the language used by selecting a Set button 213.

Next, the user sets the usage country in which the information processing apparatus 100 is used (step S120). At step S120, the user sets the country in which the information processing apparatus 100 is set up and used as the usage country. The usage country can be set, for example, in the usage country selection screen 220 shown in FIG. 4. A country name list 221, which is a list of country names that can be set as a usage country, is displayed in the usage country selection screen 220 and the user selects one country from the country name list 221 by moving a cursor 222 from the input unit 140. If a country name that is not displayed in the screen is selected, the country name list 221 is scrolled up or down by up/down buttons 223 and after the country name is caused to appear in the screen, the country can be selected by the cursor 222. Then, the country on the cursor 222 can be set as the usage country by selecting a Set button 224.

By setting the usage country in this manner, the frequency band of video signals selected by the tuner unit 110 can be narrowed down. The set usage country is also used as information to decide the information providing unit to be operated.

Here, after step S120, setting processing of basic setting information is further performed. For example, information about auto-tuning or information about the quick start that starts the information processing apparatus 100 in a short time can be set.

After settings of all basic information are completed, the control unit 150 starts processing to decide the information providing unit to be used. After receiving instructions from the control unit 150, the usage country determination unit 172 of the selection processing unit 170 determines whether the usage country set at step S120 is supported by the first information providing unit 120 (step S130). If the information processing apparatus 100 is not used in a country (supported country) in which first program information can be provided, it is difficult for the first information providing unit 120 to acquire first program information. Therefore, if the set usage country is not a country that supports the first information providing unit 120, the second information providing unit 130 is set to be used and information indicating that the second information providing unit 130 is the information providing unit to be used is recorded in the settings storage unit 190 before terminating processing (step S140).

If, on the other hand, the set usage country is a country that supports the first information providing unit 120, whether the language used set at step S110 is a language (supported language) supported by the first information providing unit 120 is determined (step S150). Even if the information processing apparatus 100 is used in a country supported by the first information providing unit 120, the language used in the supported country (standard language of the supported country) and the language used by the user do not necessarily match. Thus, at step S150, whether the language used by the user can be used as the display language of an operation menu to operate first program information and the like in the EPG screen is determined.

If it is determined at step S150 that the set language used is a language supported by the first information providing unit 120, detailed settings of the first information providing unit 120 are made before terminating processing (step S160). To cause the first information providing unit 120 to execute advanced functions, more detailed information may become necessary, in addition to basic setting information of the information processing apparatus 100. Thus, at step S160, the user is caused to set information necessary to cause the first information providing unit 120 to function. Information settings made at step S160 includes, for example, a setting of zip code input to identify a usage region more detailed than the usage country. Before terminating processing, the control unit 150 records information indicating that the first information providing unit 120 is set as the information providing unit to be used in the settings storage unit 190.

On the other hand, if it is determined at step S150 that the set language used is not a language supported by the first information providing unit 120, the user is caused to select a supported language of the first information providing unit 120 as the display language of the EPG screen (step S170). Step S170 is performed so that the language most understandable to the user is used to display in the EPG screen. A language selection from languages supported by the first information providing unit 120 is made, for example, in the program information language selection screen 230 shown in FIG. 5. In FIG. 5, the first information providing unit 120 is displayed as "Guide A".

A supported language list 231, which is a list of supported languages of the first information providing unit 120, is displayed in the program information language selection screen 230 and the user selects one language from the supported language list 231 by moving a cursor 232 from the input unit 140. Then, the language on the cursor 232 can be set as the display language of EPG presenting first program information in the EPG screen by selecting a Set button 233. Processing terminates when the display language of EPG presenting first program information in the EPG screen is set at step S170. Before terminating processing, the control unit 150 records information indicating that the first information providing unit 120 is used in the settings storage unit 190.

As an example of such selection processing of the information providing unit, assume that Great Britain is set as the usage country and Russian is set as the language used by the user at steps S110 and S120. If, in this case, the first information providing unit 120 can acquire first program information in Great Britain, but does not support Russian, the control unit 150 performs processing at steps S130 and S150 before performing processing at step S170. At this point, for example, the program information language selection screen 230 shown in FIG. 5 is presented to the user through the display unit 160 and the user selects the display language (for example, English) of the EPG screen from the supported language list 231 displayed in the program information language selection screen 230. In this manner, the first information providing unit 120 can display the EPG screen of the first information providing unit 120 providing first program information in the supported language specified by the user.

In the foregoing, selection processing of the information providing unit performed during initialization of the information processing apparatus 100 according to the present embodiment has been described. As described above, the information providing unit to be used of the two information providing units can automatically be decided based on the language used by the user and the usage country of the information processing apparatus 100, which are basic setting information set by the user. When the information processing apparatus 100 is used in a country in which first program information can be acquired by the first information providing unit 120 capable of realizing advanced functions and the user selects a language supported by the first information providing unit 120 as the language used, the first information providing unit 120 is caused to operate. Otherwise, the information processing apparatus 100 causes the second information providing unit 130 to operate. By selecting the information providing unit to be operated in this manner, more advanced functions can be provided in the language desired by the user if possible.

### <Change processing of the information providing unit>

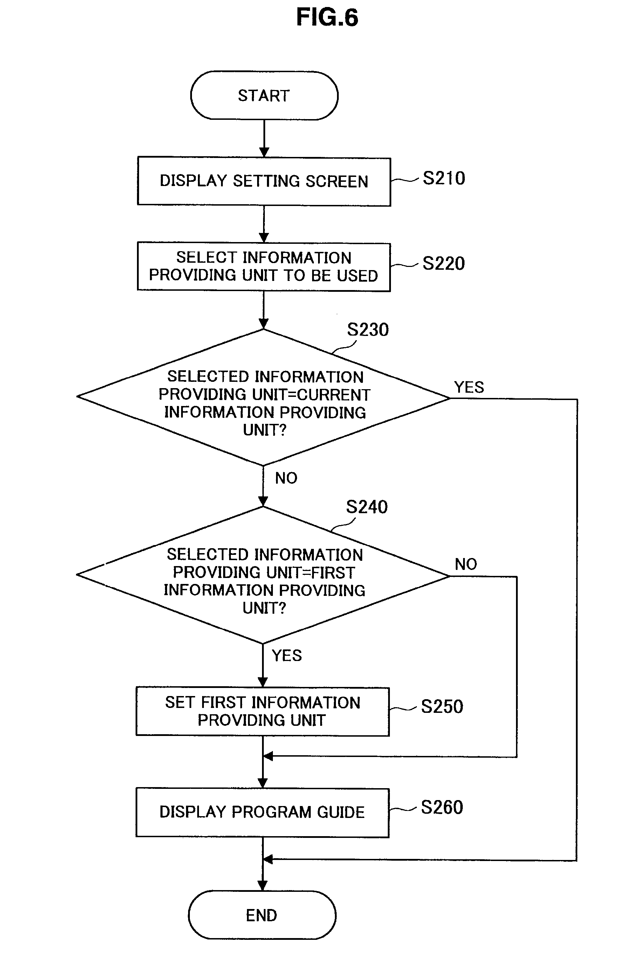

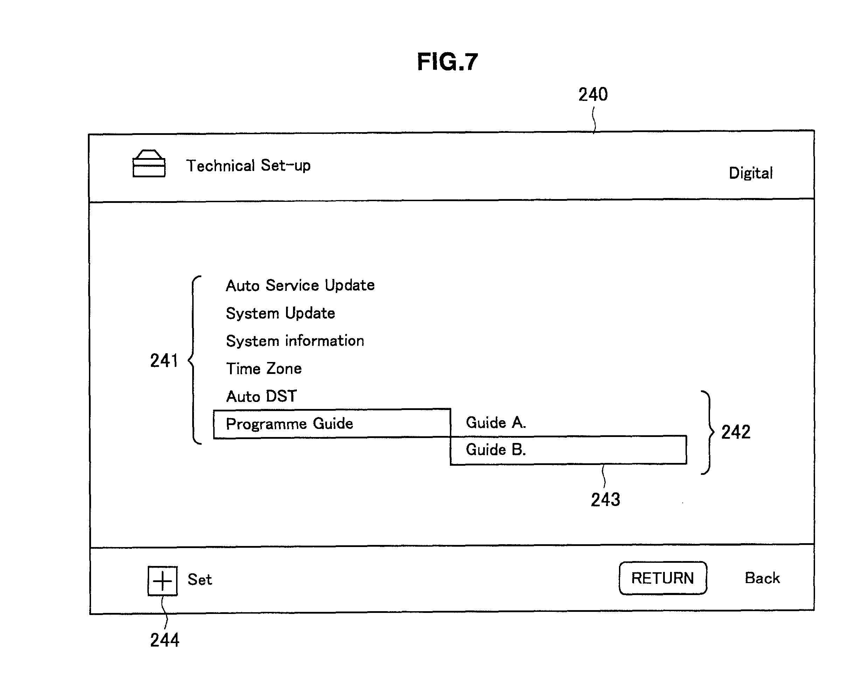

The information providing unit selected in selection processing of the information providing unit performed during initialization of the information processing apparatus 100 can optionally be changed by the user. Accordingly, the second information providing unit 130 can also be used in a supported country of the first information providing unit 120. Change processing of the information providing unit to be used will be described below based on FIGS. 6 and 7. FIG. 6 is a flow chart showing change processing of the information providing unit according to the present embodiment. FIG. 7 is an explanatory view exemplifying a setting screen 240 to select the information providing unit to be used.

In change processing of the information providing unit according to the present embodiment, as shown in FIG. 6, first the control unit 150 causes the display unit 160 to display a setting screen (step S210). Then, the user selects the information providing unit to be used through the setting screen (step S220). For example, as shown in FIG. 7, the setting screen 240 has a setting list 241, which is a list of setting information to be set, displayed therein. If "Programme Guide" is selected from the setting list 241, a list 242 of information providing units that can be selected is displayed. For example, "Guide A" displayed in the list 242 in FIG. 7 is the first information providing unit 120 and "Guide B" is the second information providing unit 130. The user selects one information providing unit to be used from the list 242 by moving a cursor 243 from the input unit 140. Then, the information providing unit on the cursor 243 can be set as the information providing unit to be used by selecting a Set button 244.

Next, whether the information providing unit selected in the setting screen 240 matches the information providing unit currently in use is determined (step S230). If it is determined at step S230 that both information providing units match, the selected information providing unit is already set as the desired information providing unit and thus, processing terminates without setting information about the information providing unit stored in the settings storage unit 190 being changed. On the other hand, if it is determined at step S230 that both information providing units do not match, whether the information providing unit selected in the setting screen 240 is the first information providing unit 120 (step S240).

As described above, the first information providing unit 120 can provide advanced functions. Thus, in order to use the first information providing unit 120, it is necessary to make detailed settings such as the usage region. Therefore, whether information settings to use the first information providing unit 120 are necessary is determined at step S240. If it is determined at step S240 that the first information providing unit 120 is selected, information settings of the first information providing unit 120 are determined to be necessary and settings of the first information providing unit 120 are made (step S250). On the other hand, if it is determined at step S240 that the second information providing unit 130 is selected, the control unit 150 continues to processing at step S260.

Then, when settings of the first information providing unit 120 are completed, a first program guide is generated from first program information provided by the first information providing unit 120 and the first program guide is displayed in the display unit 160 before terminating processing (step S260). If it is determined at step S240 that the second information providing unit 130 is selected, a second program guide is generated from second program information provided by the second information providing unit 130 and the second program guide is displayed in the display unit 160 before terminating processing (step S260).

As a situation in which the information providing unit to be used is changed, for example, a case in which first program information is operated from the first information providing unit 120 in a language that is not the language used by the user can be considered. If program information should be operated by the second information providing unit 130 that can support the language used by the user, the processing may be performed. At steps S210 and S220, the user causes the display unit to display the setting screen 240 of the information processing apparatus 100 and selects change processing of the information providing unit from the setting list 241 to select the information providing unit to be used. If the second information providing unit 130 ("Guide B" in FIG. 7) is selected to change from the first information providing unit 120 currently in use to the second information providing unit 130, processing at step S230 and thereafter will be performed.

Because the current information providing unit and the selected information providing unit are different, the control unit 150 continues to step S240. Then, the selected information providing unit is the second information providing unit 130 and thus, there is no need to additionally set information necessary to cause the information providing unit to function. Therefore, the control unit 150 continues to step S260 and causes the second information providing unit 130 to operate. Then, the control unit 150 acquires second program information through the second information acquisition unit 132 to generate a second program guide and causes the display unit 160 to display the second program guide. At this point, the second program information is provided in the standard language of the usage country set during initialization of the information processing apparatus 100. If the information providing unit after the change does not support the language used, the user may be caused to select the language to be used when program information is provided from languages supported by the information providing unit.

In the foregoing, change processing of the information providing unit according to the present embodiment has been described. Thus, the user can change the information providing unit to be operated in the information processing apparatus 100. At this point, if it is necessary to set information when, for example, it is difficult to cause the information providing unit newly selected to be operated to function with the setting information currently set, the user is prompted to set information. Accordingly, the user can easily change the information providing unit to be operated so that desired program information being provided can be received.

The information processing apparatus 100 according to the present embodiment may further be provided with a position information acquisition unit (not shown) that acquires position information to determine the position where the information processing apparatus 100 is set up and used. The position information acquisition unit is, for example, a receiver of GPS (Global Positioning System) and can capture the position of the position information acquisition unit using artificial satellites. The country or region where the information processing apparatus 100 is set up can be determined from position information acquired by the position information acquisition unit so that the determined country can be used as the usage country and the determined region as setting information of the first information providing unit 120. Accordingly, information about such positions can automatically be set without the need for the user to input the usage country or usage region.

In the foregoing, the information processing apparatus 100 according to the first embodiment and the operation setting method to decide one information providing unit to be operated from two information providing units have been described. According to the information processing apparatus 100 in the present embodiment, the information providing unit to be operated is decided based on the country in which the information processing apparatus 100 is used and the level of functions provided by the information providing unit. If the decided information providing unit does not support the language used, the user is caused to select the language to be used when program information is provided from languages supported by the information providing unit. Accordingly, the information providing unit capable of providing advanced functions can be caused to operate by the user and information provided by the information providing unit can be provided in the language desired by the user. Moreover, the need for more resources can be eliminated and a slowdown of response speed to a user operation can be avoided by operating only one of two information providing units and stopping the other information providing unit.

It should be understood by those skilled in the art that various modifications, combinations, sub-combinations and alterations may occur depending on design requirements and other factors insofar as they are within the scope of the appended claims or the equivalents thereof.

In the embodiment, for example, a TV set is shown as an example of the information processing apparatus 100, but the present invention is not limited to such an example. For example, the present invention may be applied to a recording/reproducing apparatus such as a hard disk recorder capable of recording/reproducing content information.

In the embodiment, the information processing apparatus 100 has two EPGs (information providing units) mounted therein, but the present invention is not limited to such an example and may have more than two EPGs mounted therein. In this case, like the embodiment, the EPG to be used can automatically be decided by a method similar to the selection method of EPG by having an order of precedence of EPGs to be used decided in accordance with program information that can be provided to the user and the level of function that presents program information.

The present application subject matter related to that disclosed in Japanese Priority Patent Application JP 2008-217165 filed in the Japan Patent Office on August/26, 2008.

## Claims

1. An information processing apparatus, comprising:
an input unit (140) into which a language used by a user and a usage country are input;
a plurality of information providing units (120,130) that provide program information;
a display unit (160) that displays the program information;
a decision unit (150,170) that decides one information providing unit (120 or 130) to be operated based on the input usage country and a predetermined order of precedence; and
a language determination unit (174) that determines whether the input language used is included in languages supported by the operated information providing unit (120 or 130), wherein
if the language determination unit (174) determines that the language used is not included in languages supported by the operated information providing unit (120 or 130), the language determination unit (174) causes the user to select the language used from the languages supported by the operated information providing unit (120 or 130).

2. The information processing apparatus according to claim 1, wherein if the plurality of information providing units (120,130) that support the usage country exists, the decision unit (150,170) decides as one information providing unit (120 or 130) to be operated the information providing unit (120 or 130) capable of providing most detailed program information.

3. The information processing apparatus according to claim 2, further comprising:
a setting determination unit (150) that determines whether, based on change instructions of the information providing unit (120 or 130) to be operated, the information providing unit after the change and the currently operating information providing unit are identical; and
a setting processing unit (150) that, if the setting determination unit determines that the information providing unit after the change and the currently operating information providing unit are different, makes settings of the information providing unit after the change.

4. The information processing apparatus according to claim 3, wherein the setting processing unit (150) makes settings of the selected information providing unit only if the selected information providing unit is not set.

5. The information processing apparatus according to claim 4, wherein if the information providing unit after the change does not support the language used, the language determination unit causes the user to select the language used from the languages supported by the information providing unit after the change.

6. The information processing apparatus according to claim 1, further comprising:
a position information acquisition unit that acquires position information representing a position where the information processing apparatus is used, wherein
the decision unit (150,170) determines the usage country from the position information acquired by the position information acquisition unit and decides the information providing unit to be operated based on the determined usage country.

7. An operation setting method, comprising the steps of:
inputting a language used by a user and a usage country;
deciding one information providing unit to be operated from among a plurality of information providing units (120,130) that provide program information based on the input usage country and a predetermined order of precedence;
determining whether the input language used is included in languages supported by the operated information providing unit; and
causing the user to select the language used from the languages supported by the operated information providing unit if it is determined that the language used is not included in the languages supported by the operated information providing unit.
